# EUROPEAN PATENT APPLICATION

(11) **EP 1 983 599 A1**
(43) Date of publication of application: **22.10.2008**
(21) Application number: 06842959.6
(22) Date of filing: 20.12.2006
(51) Int. Cl.: H01M 10/32, B60L 11/18, H01M 4/24, H01M 4/34, H01M 10/44

(54) **LEAD-FREE BATTERY AND VEHICLE SYSTEM USING THE SAME**

(30) Priority: 28.12.2005 JP 2005380485; 09.03.2006 JP 2006063599
(71) Applicant: Mori, Yukinobu, 6F Penthouse, 175 Piccadilly London W1J 9TB (GB)
(72) Inventor: Mori, Yukinobu, 6F Penthouse, 175 Piccadilly London W1J 9TB (GB)
(74) Representative: Feray, Valérie
(86) International application number: PCT/JP2006/325438
(87) International publication number: WO 2007/074703

(57) **Abstract**

The present invention provides a high-performance, high-capacity secondary battery that uses neither sulfuric acid in the electrolyte solution, nor other materials that could contribute to environmental pollution. The present invention also provides a vehicle system employing a lead-free battery that uses no lead nor sulfuric acid, which can be harmful to the environment, and that achieves a higher performance and higher capacity that lead storage batteries. Further, the vehicle system includes a supplementary charging function for charging the battery while the vehicle is running, by taking advantage of the fast-charging characteristics of the lead-free battery, which are superior to those of lead storage batteries, enabling the vehicle to travel long distances on a single external charge. The secondary battery has an electrode formed of calcium, silver oxide, and carbon as the anode, an electrode formed of zinc and carbon as the cathode, and an aqueous alkaline solution as the electrolyte solution. The vehicle system has at least first and second battery packs configured of these lead-free batteries, in-wheel generators mounted within wheels of the vehicle, an electric motor for driving the vehicle, and a charging/discharging switch device having a controller for automatically switching between the first and second battery packs.

## Description

### Field of the Invention

The present invention relates to a lead-free battery using no materials that contribute to environmental pollution, such as lead in the electrode plates and sulfuric acid in the electrolyte solution, while achieving higher performance and higher capacity as a secondary battery with faster charging/discharging characteristics than those of a lead storage battery. The present invention also relates to a vehicle system employing this lead-free battery as a secondary battery that is suitable for use in vehicles.

### Description of the Related Art

Lead storage batteries, incorporating lead as electrodes and sulfuric acid as an electrolyte solution, are a common secondary battery that have enjoyed widespread use for a considerably long time, during which these batteries have undergone improvements in materials and structure to enhance their performance and to extend their life time. Specifically, improvements in the electrode plates, separators, and battery housing, for example, have led to production of maintenance-free batteries.

However, lead storage batteries are, in general, heavy and bulky as well as are of low energy capacity. In addition to these drawbacks, efforts to increase the performance of a lead storage battery using sulfuric acid as the electrolyte solution tends to cause sulfuration that inevitably leads to an increase in internal resistance of battery.

As sulfuration progresses, the flow of ions is impeded and ultimately the battery stops working and must be discarded. However, disposing of batteries that contain such harmful materials as sulfuric acid and lead is not an easy process.

Further, when lead storage batteries are used in heavily loaded condition, both the electrode plates and the electrolyte solution are depleted. Obviously, in case of sealed batteries it is not possible to replace the electrode plates or to replenish the electrolyte solution.

While some improvements have been made to the internal structure and electrolyte solution of the lead storage battery, most lead storage batteries suffer from a gradual deterioration in performance, and the potential for environment harm inherent in these materials is unavoidable.

Patent Reference 1 discloses one technology for improving the internal structure of a lead storage battery. Here the battery is provided with a control valve disposed in the cover on the electrolytic tank. The control valve has a catalyst for efficiently reacting with gas generated in the battery to produce water. The water is circulated back to the electrolytic tank, preventing sulfuration on the negative electrode. However, these lead storage batteries have limited applications and usage due to the problems described above.

Hence, with the recent popularity of portable devices, lithium ion batteries are being more and more widely used as secondary batteries in these devices due to their ability to overcome to some degree the problems associated with lead storage batteries. More specifically, lithium ion batteries are less harmful to the environment and can achieve a high energy density in a smaller and lighter form than lead storage batteries do.

However, lithium ion batteries are expensive to manufacture. Further, these batteries have a cycle life time of about 300 cycles, which is low compared with that of 1,000 cycles of a lead storage battery; therefore the running cost of lithium ion batteries is high.

Further, lithium ion batteries do not have the capacity to withstand over-discharge and overcharge and may overheat in the latter case. The batteries may rupture and explode when heated over about 130°C, spewing the electrolyte contained therein.

Various methods have been developed to handle these problems before the internal temperature reaches the rupturing point, including a method of allowing gas to escape through part of a gasket provided in the sealed section of the battery, a method of allowing gas to escape by tearing away a tab part (positive terminal), and a method of suppressing the production of gas by breaking down and short-circuiting an internal separator.

Alternatively, Patent Reference 2 discloses a technique for using a gel-like nonaqueous electrolyte to reduce the risk of fire present when the electrolyte solution is composed of a combustible organic solvent.

However, the secondary battery, when used in a vehicle system, has the following problems.
While lead storage batteries have conventionally been used in vehicles, the following problems have occurred. First, lead storage batteries have a low energy-to-volume ratio, therefore are necessarily heavy and bulky when used in vehicles.

Other problematic factors for vehicle systems include the increase in internal resistance in lead storage batteries accompanying sulfuration, as described above, and the difficulty of disposing of the hazardous sulfuric acid and lead materials in the batteries. Since lead storage batteries used in vehicles are run with a particularly heavy load, both electrode plates and electrolyte break down quickly. If the battery is sealed, it is not possible to replace the electrode plates or to replenish the electrolyte solution, shortcomings that make the battery unsuitable for vehicle systems.

While Patent Reference 1 improves the internal structure of the lead storage battery so that the battery can withstand heavily loaded usage required for vehicles. In any case usage of a lead storage battery as the secondary battery limits improvements of the vehicle system.

Patent Reference 1: Japanese unexamined patent application publication No. 2001-148256 (pages 2 and 3, as well as Fig. 1)
Patent Reference 2: Japanese unexamined patent application publication No. H09-270271 (pages 2 and 3, as well as Fig. 1)

### Disclosure of the Invention

### Problems to be Solved by the Invention

In view of the foregoing, it is an object of the present invention to provide a lead-free battery that employs no lead or sulfuric acid, both of which can be harmful to the environment.

To achieve these objects, the present invention will provide a secondary battery having a higher performance and a higher capacity than a lead storage battery has. This battery includes an electrode formed of calcium (Ca), silver oxide (Ag₂O), carbon, and the like as the anode, and an electrode formed of zinc (Zn) and carbon as the cathode, and employs an aqueous alkaline solution as the electrolyte solution.

It is another object of the present invention to provide a vehicle system employing this lead-free battery as the secondary battery having fast charging/discharging characteristics superior to those in lead storage batteries. More specifically, it is an object of the present invention to provide a vehicle system that produces less environmental pollutants while that comprises a supplementary charging function for charging the battery while the vehicle is running, enabling the vehicle to travel a long distances with a single external charge.

### Means of Solving the Problems

In order to resolve the problems described above, the present invention provides a lead-free battery comprising an anode formed of a mixture of calcium, silver oxide, and carbon; a cathode formed of a mixture of zinc and carbon; wherein lead is not used in the anode nor in the cathode; a separator disposed between the anode and the cathode for selectively allowing passage of hydroxide ions; and an aqueous alkaline solution provided between the anode and the cathode as an electrolyte solution.

(a) The anode comprises a mesh-shaped cupronickel electrode base material, and an anode paste material formed by mixing calcium, silver oxide, and carbon after introducing a binder, the paste material being applied to the electrode base material and dried. (b) The cathode comprises a mesh-shaped zinc plate electrode base material, and a cathode paste material formed by mixing zinc and carbon after introducing a binder, the paste material being applied to the electrode base material and dried.

The proportions of calcium, silver oxide, and carbon mixed for the anode at least fall within the ranges 40-60% calcium, 20-30% silver oxide, and 10-40% carbon.

The proportions of zinc and carbon mixed for the cathode at least fall within the ranges 60-90% zinc, and 10-40% carbon.

The present invention also provides a vehicle system employing the lead-free battery according to Claim 1, the vehicle system comprises: (a) cells each having a plurality of the anodes and the cathodes arranged alternately, with both surfaces of the anodes and the cathodes opposing surfaces of the other through separators interposed therebetween in order to increase the capacity of the cell.
The vehicle system comprises further
(b) a first and a second battery packs comprising a plurality of the cells of a prescribed capacity connected in series for outputting a prescribed DC voltage;
(c) in-wheel generators comprising rotors fixed to a wheel disc of each wheel on a vehicle, and stators fixed in axle bearings for each wheel so that at least part of the rotors and stators are accommodated in a space enclosed by the wheel discs and rims of the wheels , thus the in-wheel generators functioning to output power when the wheels rotate as the vehicle moves;
(d) an electric motor for driving the vehicle with electric power;
(e) a charging/discharging switch device capable of switching between (i) a "first battery discharging / second battery charging" mode in which an electrode terminal of the first battery pack is connected to an input terminal of the electric motor according to an ON signal and an electrode terminal of the second battery pack is connected to the in-wheel generators according to an ON signal, and (ii) a "second battery discharging / first battery charging" mode in which an electrode terminal of the second battery pack is connected to an input terminal of the electric motor according to an ON signal and an electrode terminal of the first battery pack is connected to the in-wheel generators according to an ON signal; and
(f) a switch controller configured of a computer and comprising mode switching means (i) for measuring the amount of power consumption in each of the first and the second battery packs, (ii) for accumulating the results in memory, and (iii) for automatically transmitting control signals to a set of electric switches in the charging/discharging switch device to switch battery packs when a battery level of one battery pack drops below a prescribed level stored in memory.

(a) Each of the anodes in the cells comprises a mesh-shaped cupronickel electrode base material having a prescribed volume and dimensions, and an anode paste material formed by mixing calcium, silver oxide, and carbon at prescribed proportions after introducing a binder, the paste material being applied to the electrode base material and dried; and
(b) each of the cathodes in the cells comprises a mesh-shaped zinc plate electrode base material having the same volume and dimensions as the anodes, and a cathode paste material formed by mixing zinc and carbon at prescribed proportions after introducing a binder, the paste material being applied to the electrode base material and dried.

The prescribed proportions of calcium, silver oxide, and carbon mixed for the anode paste material at least fall within the ranges 40-60% calcium, 20-30% silver oxide, and 10-40% carbon. The prescribed proportions of zinc and carbon mixed for the cathode paste material at least fall within the ranges 60-90% zinc, and 10-40% carbon.

The switch controller comprises generator separating means for constantly monitoring the output voltages of the connected battery pack and the in-wheel generators and for transmitting a switch (OFF) signal to all electric switches for output terminals of the in-wheel generators when the voltages of the in-wheel generators drop below that of the battery pack.

The vehicle system further comprises
(a) a third electrical storage device disposed on the charging/discharging switch device along with the first and second battery packs. The third electrical storage device is a capacitor part that comprises n (where n is an integer) double-layer capacitors,
(b) a charge-switching control circuit for sequentially charging each of the n double-layer capacitors at prescribed intervals using the inputted power, and
(c) a discharge-switching control circuit for sequentially discharging the n double-layer capacitors.
Here the switch controller comprises capacitor discharging means for detecting when the vehicle begins moving and, upon detecting this movement, for transmitting a control signal to connect the capacitor part to the electric motor of the vehicle in order that the electric motor is supplied with a large current required for starting the vehicle in motion.

### Effects of the Invention

The lead-free battery of the present invention achieves the following effects. The present invention simplifies disposal of the lead-free battery since the battery contains no materials that are harmful to the environment, such as lead (Pb) in the electrodes and sulfuric acid in the electrolyte solution.

In addition to resolving the various problems associated with lead storage batteries described above, the lead-free battery of the present invention has the following features.

1) The lead-free battery can be charged rapidly, achieving a full charge in about one-third the time required for a lead storage battery. Further, since carbon is mixed into the anode and the cathode, these electrodes function partially as capacitors.

2) Since there is no memory effect in these batteries, the batteries can be recharged before being completely discharged. Consequently, the mechanism for maintaining the batteries is simplified. Here the memory effect is peculiar to Ni-Cd and Ni-MH batteries, particularly when the anode contains nickel (Ni).

3) The lead-free battery can be rapidly discharged and, hence, has the characteristics of a supercapacitor.

4) The lead-free battery is small and lightweight, with a weight about one-fifth and a size (volume) about one-third that of a lead storage battery.

The lead-free battery has a voltage per cell of about 2.5 V, which is higher than the 2.0 V per cell of a lead storage battery. Therefore, fewer cells are needed to achieve the desired voltage with the lead-free battery, resulting in a smaller and lighter battery pack.

5) Both the electrodes and electrolyte can be recycled, being no burden on the environment. The electrolyte solution, the anode, and the cathode can be recycled as they include no organic additives or the like.

6) Since the internal structure of the battery is simple, similar to a lead storage battery, and uses inexpensive materials, the battery can be manufactured at a low cost. Moreover, the battery weighs less than a lead storage battery, enabling the outer casing to be configured of a lighter structure to reduce material costs.

The vehicle system of the present invention achieves the following effects. Specifically, by using no lead or sulfuric acid, the lead-free battery contains no materials that are harmful to the environment, facilitating disposal of the vehicle.

Further, since the present invention resolves the problems associated with lead storage batteries described above, such as that of being too heavy and bulky, as well as that of sulfuration, the lead-free battery is easy to maintain.

Further, since the battery of a vehicle must discharge rapidly for a short amount of time when the vehicle begins moving, the lead-free battery of the present invention has a greater capacity to withstand rapid discharging than conventional lead storage batteries. Further, the lead-free battery of the present invention suffers from fewer malfunctions due to fast discharging than conventional batteries. The lead-free battery further reduces such malfunctions by adding a capacitor part having a plurality of double-layer capacitors.

The lead-free battery is also capable of fast charging, achieving a full charge in about one-third the time required for a lead storage battery. In addition to recharging a spent battery pack, the vehicle system of the present invention can sufficiently charge two battery packs alternately in short periods of time while the vehicle is running.

Further, since there is no memory effect in these lead-free batteries, the batteries can be recharged from any battery level so that the vehicle system can arbitrarily switch between the two battery packs while the vehicle is running to perform supplementary recharging of one battery pack at a time, thereby remarkably increasing the distance that the vehicle can travel. Hence, the vehicle system can go for longer intervals than a conventional vehicle system without fully charging the battery packs with an external power source.

Further, the lead-free battery has a voltage per cell of about 2.5 V, which is higher than the 2.0 V per cell of a lead storage battery. Therefore, fewer cells are needed to achieve the desired voltage with the lead-free battery, resulting in a smaller and lighter battery pack.

Further, since the internal structure of the battery is simple, similar to a lead storage battery, but uses light, inexpensive materials, the battery can be manufactured at a low cost. Moreover, the outer casing can be configured of a lighter structure to reduce material costs.

By providing fuel cells together with the pair of battery packs, which are charged and discharged alternately in the vehicle system, and connecting the fuel cells to the battery pack being charged, the battery packs can run a considerably longer time before being fully charged with an external power source, thereby achieving a vehicle that emits an extremely low amount of pollutants into the atmosphere.
Further, the outside of the vehicle may be sprayed or coated with a photocatalyst (such as titanium dioxide in the form of a liquid or of ultrafine particles, for example). Exposure to ultraviolet light produces free electrons in the vehicle, and the resulting holes function to oxidize organic matter in the atmosphere.
In summary, the current invention can effectively produce an unprecedented vehicle system capable of resolving environmental problems.

### Brief Descriptions of the Drawings

Fig. 1 shows the internal structure of an individual cell in the lead-free battery according to the present invention;
Fig. 2 shows the structure of an anode and a cathode of the lead-free battery according to the present invention, with Fig. 2(a) showing steps in a process for manufacturing the anode plate while Fig. 2(b) showing steps in a process for manufacturing the cathode plate;
Fig. 3 shows an embodiment of the lead-free battery according to the present invention, with Fig. 3(a) showing an example of a battery for an electric wheelchair (24 V DC) while Fig. 3(b) showing an example of a battery for a power drill (12 V DC);
Fig. 4 is a table comparing specifications of the lead-free battery according to the present invention and a conventional lead storage battery;
Fig. 5 is a graph comparing charging characteristics of the lead-free battery according to the present invention and a lead storage battery;
Fig. 6 is a graph comparing discharging characteristics of the lead-free battery according to the present invention and a lead storage battery;
Fig. 7 is a configuration diagram showing a first embodiment of the vehicle system according to the present invention;
Fig. 8 is a configuration diagram showing a second embodiment of the vehicle system according to the present invention;
Fig. 9 illustrates the structure of in-wheel generators mounted in wheels of the vehicle;
Fig. 10 is a cross-sectional view along a plane passing through the axle and perpendicular to the ground showing the structure of the rotor and stator in the in-wheel generator in detail;
Fig. 11 is a conceptual drawing showing an embodiment of a charging/discharging switch device;
Fig. 12 shows the structure of the capacitor part;
Fig. 13 shows the structure of a single lead-free battery cell a battery pack using the cells designed for a vehicle.

### Explanations of the Reference Numerals

- a: anode terminal
- b: cathode terminal
- c: cathode plate
- d: anode plate
- e: aqueous alkaline solution
- f: separator
- g: outer casing
- h1-h8: gate terminal of silicon-controlled rectifier
- 10: unit (containing a plurality of cells)
- 11: first battery pack
- 12: second battery pack
- 20: electric motor
- 30: in-wheel generator
- 30a: multiplexer
- 31: front wheel
- 32: rear wheel
- 33: axle
- 33a: ball bearing
- 34: wheel disc
- 34a: fixing protrusion
- 34b: rim
- 35: rotor
- 35a: coils
- 36: stator
- 37: axle bearing
- 37a: ball bearing
- 37b: support member
- 37c: extended part
- 39: output cable
- 41, 42: charging/discharging switch device
- 51, 52: switch controller
- 53: storage device
- 54: control output interface circuit
- 55: input interface circuit
- 60: capacitor part
- 61: double-layer capacitor
- 62: charge-switching controller
- 63: discharge-switching controller
- 64: charging terminal
- 65: discharging terminal
- 90: vehicle
- 90a: chassis
- 90b: tire
- 90c: suspension
- 90d: spring
- 100, 200: vehicle system

### Best Mode for Carrying Out the Invention

Preferred embodiments of the lead-free battery according to the present invention will be described below in detail while referring to the accompanying drawings.

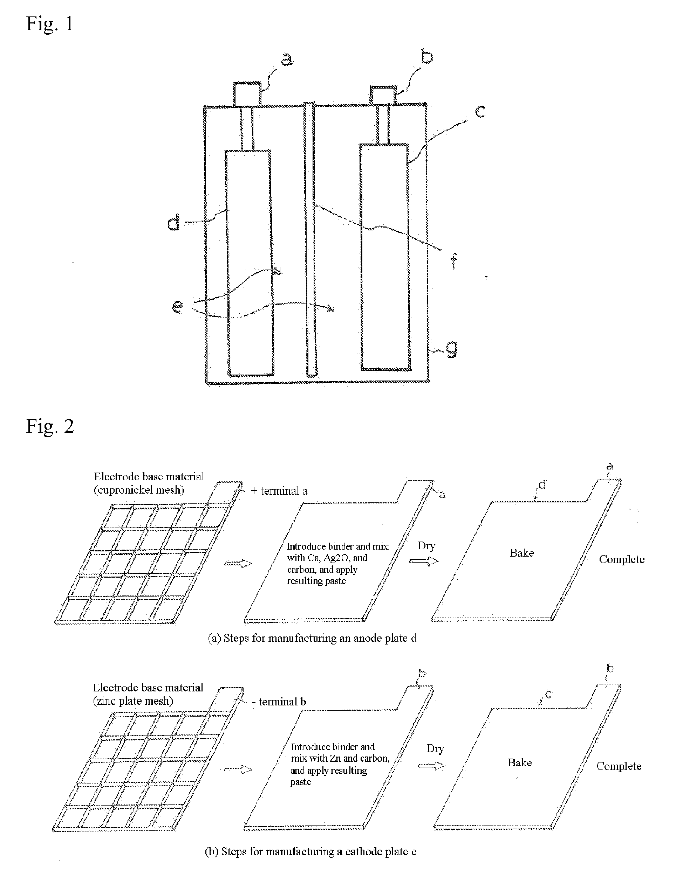

Fig. 1 shows the internal structure of an individual cell in the lead-free battery. As shown in Fig. 1, the lead-free battery includes an anode terminal *a* and a cathode terminal b, a cathode plate c and an anode plate d, an aqueous alkaline solution *e*, a separator f that selectively allows passage of hydroxide ions, and an outer casing g.

Fig. 2 shows the structure of the cathode plate c and the anode plate d of the lead-free battery in Fig. 1, with Fig. 2(a) showing steps in a process for manufacturing the anode plate d while Fig. 2(b) showing steps in a process for manufacturing the cathode plate c.

To produce the anode plate d, first an electrode base plate is manufactured by forming a cupronickel sheet in a mesh configuration. An anode (+) terminal *a* is also provided on one end of the plate at this time.

Next, a binder is introduced into a mixture of calcium (Ca), silver oxide (Ag₂O), and granular carbon and mixed to form a paste. This paste is applied to the electrode base plate configured of the cupronickel mesh.

After application, the paste is allowed to dry and then baked to complete production of the anode plate d.

To produce the cathode plate c, on the other hand, an electrode plate is manufactured by first forming a zinc sheet in a mesh shape, with a terminal provided on one end thereof.

A binder is introduced into and mixed with zinc (Zn) and granular carbon to form a paste, which is applied to the electrode base plate.

After application, the paste is allowed to dry and then baked to complete production of the cathode plate c.

Here, the proportions of calcium (Ca), silver oxide (Ag₂O), and carbon making up the anode plate d and the proportions of zinc (Zn) and carbon making up the cathode plate c must fall within the following ranges.
Anode: 40-60% calcium, 20-30% silver oxide, and 10-40% carbon,
Cathode: 60-90% zinc, and 10-40% carbon

Next, operations of the battery having the above structure will be described.

As seen in the following reaction formula for the electrodes, 2e⁻ (two electrons) flows from the negative electrode to the positive electrode.
Positive electrode: Ag₂+H₂O+2e⁻→2Ag+2OH⁻
Negative electrode: Zn+2OH⁻→ZnO+H₂O+2e⁻

The 2OH⁻ generated in the positive electrode migrates through the separator to the negative electrode.

While the reaction formula is based on silver in the above example, during charging Ca⁺ ions are released and adsorbed primarily in the carbon of the cathode material (plate). During discharging, the Ca⁺ ions separate from the carbon and return to the anode material (plate).

Calcium ions have a large ionic radius (0.99), hence, charging performance is greatly dependent on the efficiency of the cathode material that stores these (large) ions.

However, since each of calcium ions is a divalent cation, they can produce a high voltage (1.8-3.0 V per cell) and achieve a high capacity and a high energy density.

The lead-free battery of the present invention combines the conventional silver-zinc battery with the properties of calcium ions.

Since silver-zinc batteries have an energy density about three times that of lead storage batteries, these batteries can be made smaller and lighter.

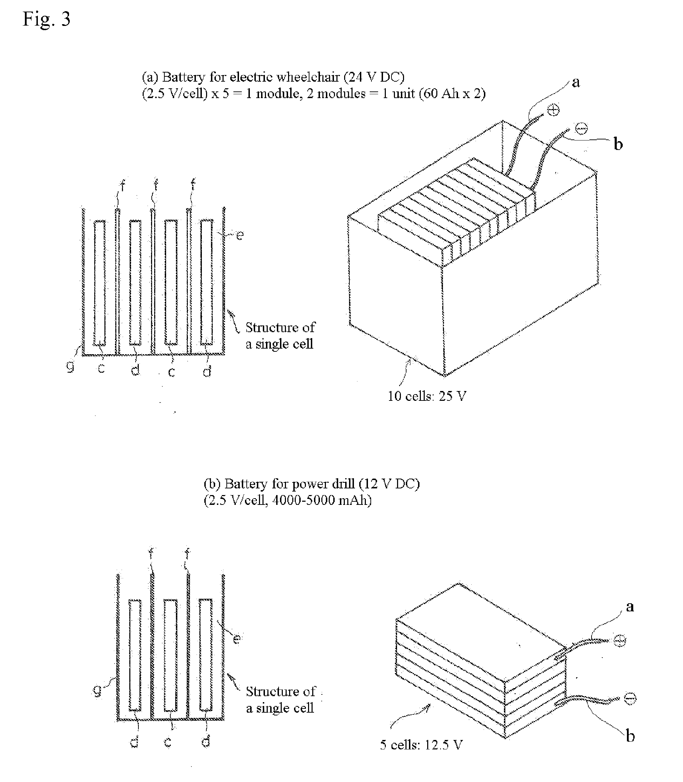

Next, an example of a lead-free battery cell having the above structure will be described with reference to Fig. 3(a). In this example, ten cells are connected in series to produce a 24 V DC battery for use in an electric wheelchair or the like.

The drawing on the left of Fig. 3(a) shows the internal structure of a single cell. One module is produced by combining five cells, where one cell gives 2.5 V, and one unit is produced by using two modules. Hence, one unit gives 25 V and has a capacity of 60 Ah x 2.

Fig. 3(b) shows an example of a battery (about 12 V DC) for a power drill, which requires less capacity than the electric wheelchair in Fig. 3(a). The drawing on the left in Fig. 3(b) shows the internal structure of one cell. One cell gives 2.5 V and achieves a capacity of 4000-5000 mAh. Hence, five cells give 12.5 V.

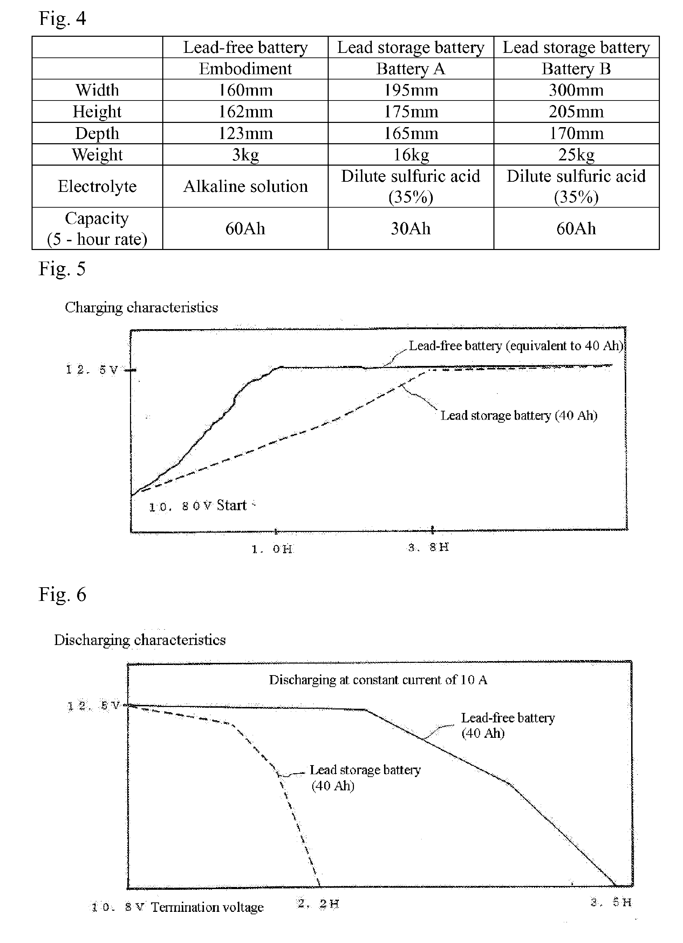

Next, the lead-free battery of the present invention will be compared to a lead storage battery with reference to Fig. 4.

Fig. 4 compares the volume, weight, and electrolyte solution required for obtaining a performance of about 60 Ah capacity. As is clear from Fig. 4, the lead-free battery of the present invention requires less volume and weight.

Fig. 5 is a graph comparing the charging characteristics of the lead-free battery according to the present invention and a lead storage battery. Both batteries have each a capacity equivalent to 40 Ah. As shown in Fig. 5, both batteries are started at 10.80 V, but the lead-free battery reaches 12.5 V after 1.0 hours, while the lead storage battery reaches 12.5 V after 3.8 hours.

The graph in Fig. 6 compares the discharging characteristics of the lead-free battery according to the present invention and a lead storage battery, each having a capacity of 40 Ah.

As shown in Fig. 6, each battery is discharged at a constant rate of current (10 A) with the lead-free battery reaching the termination voltage of 10.8 V in 3.5 hours and the lead storage battery in 2.2 hours.

The lead-free battery of the present invention can be discharged for a longer period of time to reach a lower termination voltage of about 8.0 V. However, since lead storage batteries commonly have a termination voltage of 10.8 V, measuring condition for the lead-free battery is matched with the 10.8 V of the lead storage battery in the comparative example in Fig. 6.

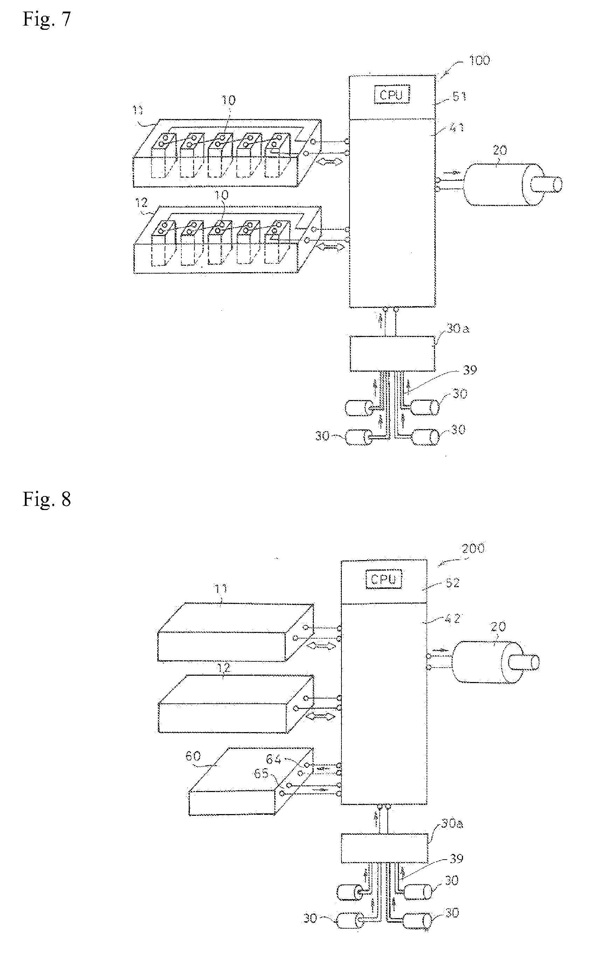

Next, preferred embodiments of a vehicle system according to the present invention will be described in detail while referring to the accompanying drawings. Fig. 7 is a configuration diagram showing a first embodiment of the vehicle system. As shown in Fig. 7, a vehicle system 100 includes lead-free batteries in a plurality of units 10. In the first embodiment, five of the units 10 are connected in series to configure each of a first and a second battery packs 11 and 12. The unit 10 will be described below in greater detail.

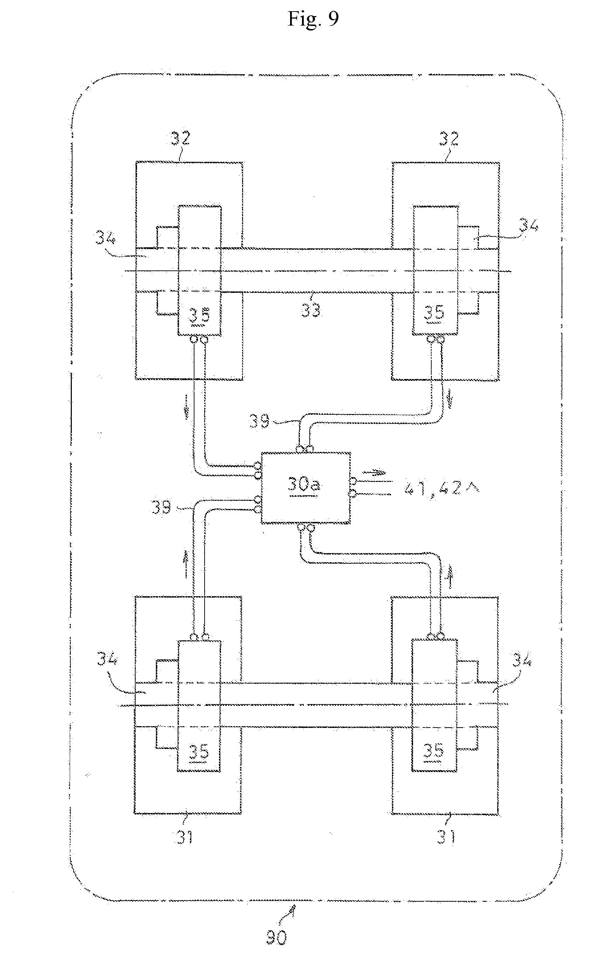

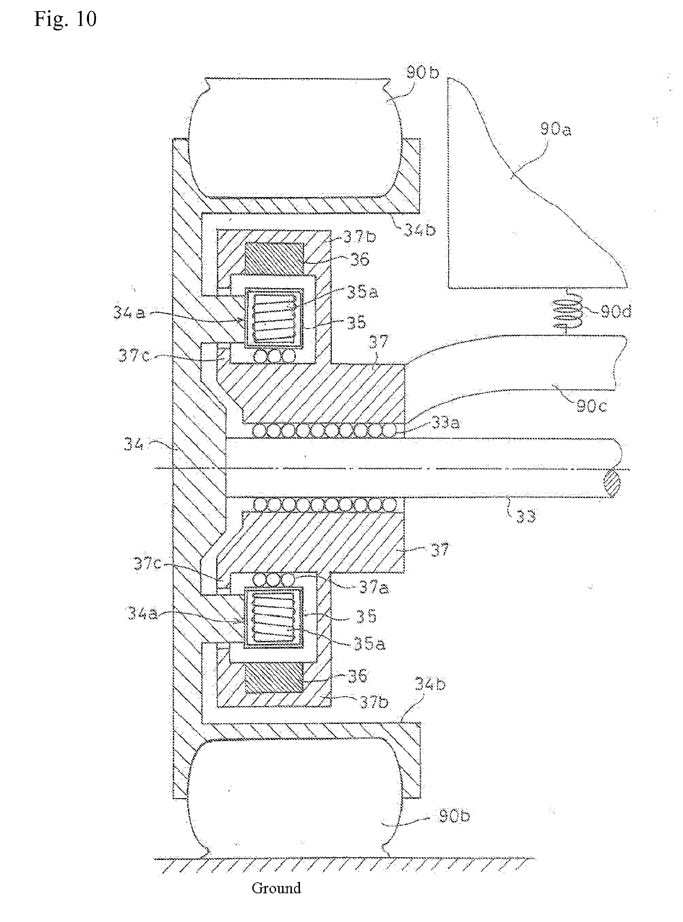

Referring to Fig. 7 as well as Fig. 9, the vehicle system 100 also includes an electric motor 20 for driving a vehicle 90, wheel discs 34 for front wheels 31 and rear wheels 32 of the vehicle 90, and four in-wheel generators 30 mounted on the wheel discs 34. The method of mounting the in-wheel generators 30 on the wheel discs 34 and the internal structure of the wheel discs 34 will be described later with reference to Figs. 10.

An output cable 39 connects each of the in-wheel generators 30 to a charging/discharging switch device 41 via a multiplexer 30a.

The charging/discharging switch device 41 has a "first battery discharging / second battery charging" mode and a "second battery discharging / first battery charging" mode, which are described next. Hereafter, the former mode is referred to as mode A and the latter as mode B.

In mode A, a switch controller 51 generates an ON signal for connecting an electrode terminal of the first battery pack 11 to an input terminal of the electric motor 20 and for connecting an electrode terminal of the second battery pack 12 to the in-wheel generators 30.

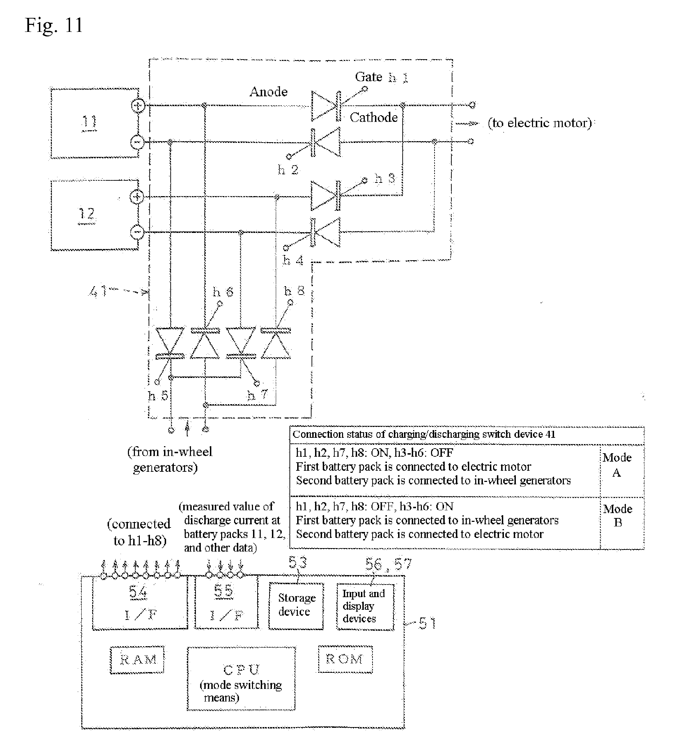

In mode B, the switch controller 51 generates an ON signal for connecting an electrode terminal of the second battery pack 12 to the input terminal of the electric motor 20 and for connecting an electrode terminal of the first battery pack 11 to the in-wheel generators 30. This process is described below in more detail with reference to Fig. 11.

As shown in Fig. 11, the switch controller 51 is configured of a computer that includes a central processing unit (CPU), a storage device 53, input and display devices 56 and 57, an control output interface circuit 54 with control terminals for controlling the charging/discharging switch device 41, and an input interface circuit 55 for inputting voltage, current, and other data in the first and second battery packs 11 and 12 and/or the in-wheel generators 30 connected to the charging/discharging switch device 41.

The switch controller 51 also has mode switching means for switching between mode A and mode B. The operations of this mode switching means are described next.

As the mode switching means, the CPU measures the amount of consumption (current and operating time) for each of the first and second battery packs 11 and 12 at prescribed intervals, stores the measured values in the storage device 53 (or in memory), and computes the amount of power consumption for each of the battery packs. When the battery level of one battery pack drops below a prescribed level stored in the storage device 53 (or in memory), the mode switching means automatically switches to the other battery pack. To do this, the CPU transmits control signals via the control output interface circuit 54 of the switch controller 51 to a set of electric switches on the charging/discharging switch device 41 for switching between mode A and mode B.

The judging operation of switching the modes may be implemented by acquiring data from the input interface circuit 55 using sensors for detecting current or voltage from the first and second battery packs 11 and 12, in-wheel generators 30, and the like.

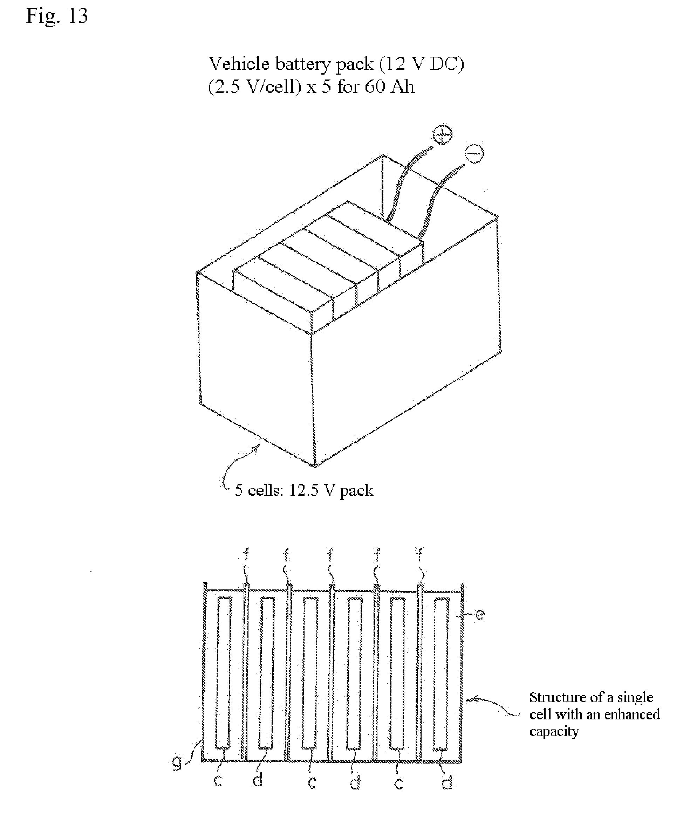

Next, the first embodiment will be described in greater detail. Fig. 13 shows a 12 V DC battery pack designed for a vehicle, containing a single unit consisting of five cells, and the structure of a single lead-free battery cell used in the battery pack. In order to increase the capacity of the cell, anodes and cathodes are alternately stacked and both surfaces of each electrode are used to increase the opposing surface area. As shown in Fig. 13, the single lead-free battery cell is configured of an anode terminal *a*, a cathode terminal b, cathode plates c, anode plates d, separators *f* through which hydroxide ions are selectively passed, and an outer casing g filled with an aqueous alkaline solution *e*.

The first and second battery packs 11 and 12 in Fig. 7 are each configured by connecting five of the cells 10 described above in series to produce a lead-free battery having a 12 V DC specification for use in a vehicle.

In the structure of the cell shown on the bottom in Fig. 13, the opposing surface area of the electrode plates is increased by increasing the surface area of the anode plates d and cathode plates c manufactured as shown in Fig. 2, and the anode plates d and cathode plates c are alternately stacked in order to use both surfaces thereof. By stacking a plurality of the electrode plates, the capacity of the cell is increased to about 60 Ah.

The diagram on the top in Fig. 13 is a perspective view of a 12.5 V battery pack formed by connecting five cells in series.

When the vehicle battery pack described above is compared to a conventional lead storage battery having the same capacity of 60 Ah, the volume and weight of the battery pack according to the present invention has a dramatically lower volume and weight, as can be seen in Fig. 4. Specifically, the volume is about one-third to one-fourth that of the lead storage battery, while the weight is about one-eighth that of the lead storage battery.

Based on the fast-charging characteristics shown in Fig. 5 for the two types of batteries at the same capacity of 40 Ah, it is clear that the lead-free battery can be fully charged in approximately one-third the time required for the lead storage battery (a reduction from 3.8 hours to 1.0 hours). Hence, the lead-free battery has superior fast-charging characteristics.

Further, as can be seen in the discharging characteristics compared in Fig. 6 at the same constant current of 10 A, it is clear that the lead-free battery takes about 1.5-1.6 times longer to discharge than the lead storage battery (an increase from 2.2 hours to 3.5 hours). Hence, the lead-free battery has superior fast-discharging characteristics.

These results indicate that the lead-free battery does not easily lose voltage during fast discharging. This is because the lead-free battery has a low internal resistance and can be said to have a supercapacity.

Next, the structure of the in-wheel generators mounted on the wheels will be described in detail. Fig. 9 illustrates the structure of the in-wheel generators.

As shown in Fig. 9, the vehicle 90 has axles 33 extending between the wheel discs 34 for the front wheels 31 and rear wheels 32, respectively. A rotor 35 is fixed to each of the wheel discs 34.

When the electric motor 20 of the vehicle 90 rotates the axles 33, each of the rotors 35 rotates relative to a stator 36 (see Fig. 10). The electric power generated by this rotation is outputted to the charging/discharging switch device 41 via the output cables 39 and the multiplexer 30a.

Fig. 10 shows the structure of the rotor and stator in the in-wheel generator in detail.

Fig. 10 is a cross-sectional view along a plane passing through the axle 33 and perpendicular to the ground. As shown in Fig. 10, the vehicle 90 also includes a chassis 90a, tires 90b, a suspension 90c, and springs 90d.

Each end of the axles 33 is supported in an axle bearing 37 via ball bearings 33a. The axle bearing 37 supports the chassis 90a via the suspension 90c and spring 90d. The center portion of the wheel disc 34 is fixed to the respective end of the axle 33. The wheel disc 34 includes a rim 34b around the peripheral portion for supporting the tire 90b.

The wheel disc 34 also includes a fixing protrusion 34a in the middle portion thereof. The axle bearing 37 includes an extended part 37c, and a support member 37b provided on the periphery of the extended part 37c. The fixing protrusion 34a penetrates a concentrically shaped opening formed between the extended part 37c and support member 37b.

The rotor 35 is fixed to the fixing protrusion 34a within the support member 37b and includes a plurality of coils 35a arranged in the circumferential direction. The rotor 35 is supported on the outside of the axle bearing 37 via ball bearings 37a.

The stator 36 formed of a permanent magnet is fixed in the support member 37b extending outward from the axle bearing 37.

With this construction, the rotor 35 rotates together with the axle 33 on the inside of the stator 36, generating power through wiring connected to both ends of the coils 35a.

Next, an example of the charging/discharging switch device 41 will be described. Fig. 11 is a conceptual drawing showing an embodiment of the charging/discharging switch device 41.

The charging/discharging switch device 41 of the preferred embodiment employs eight silicon-controlled rectifiers. Each silicon-controlled rectifier is configured of an anode, cathode, and gate. The gate terminals of the silicon-controlled rectifiers are labeled h1-h8 in Fig. 11.

These gate terminals h1-h8 are connected to respective output terminals from the control output interface circuit 54 provided in the switch controller 51 described above. Sensors are used to input various data, including the discharge currents at fixed intervals of the first or the second battery pack 11 or 12, which is in potential need of charging, into the set of input terminals on the input interface circuit 55. This data is accumulated in the storage device 53. The CPU calculates the accumulated values and transmits ON or OFF signals to the gate terminals h1-h8 to switch the mode when a predetermined discharge value has been reached.

In Fig. 11 the CPU of the switch controller 51 has an A/B mode switching means for calculating the battery level from at least the amount of discharge measured at the first and second battery packs 11 and 12 at each interval inputted via the input interface circuit 55 and a prescribed overall amount of discharge in the battery stored in the storage device 53, and for automatically switching the mode when the battery level reaches a predetermined level. The CPU switches modes by transferring ON/OFF signals to the gate terminals h1-h8 of the charging/discharging switch device 41 via the control output interface circuit 54.

In mode A shown in Fig. 11, the CPU transmits an ON signal to the h1, h2, h7, and h8 and an OFF signal to the h3, h4, h5, and h6. Based on these control signals, the charging/discharging switch device 41 connects the first battery pack 11 to the electric motor 20 and the second battery pack 12 to the in-wheel generators 30.

In mode B, the CPU transmits an OFF signal to h1, h2, h7, and h8 and an ON signal to h3, h4, h5, and h6. Based on these control signals, the charging/discharging switch device 41 connects the first battery pack 11 to the in-wheel generators 30 and the second battery pack 12 to the electric motor 20.

Next, a second embodiment of the vehicle system according to the present invention will be described. Fig. 8 is a configuration diagram showing the second embodiment of the vehicle system 200, wherein parts having the same functions as those described in Fig. 7 have been designated with the same reference numerals to avoid duplicating description.

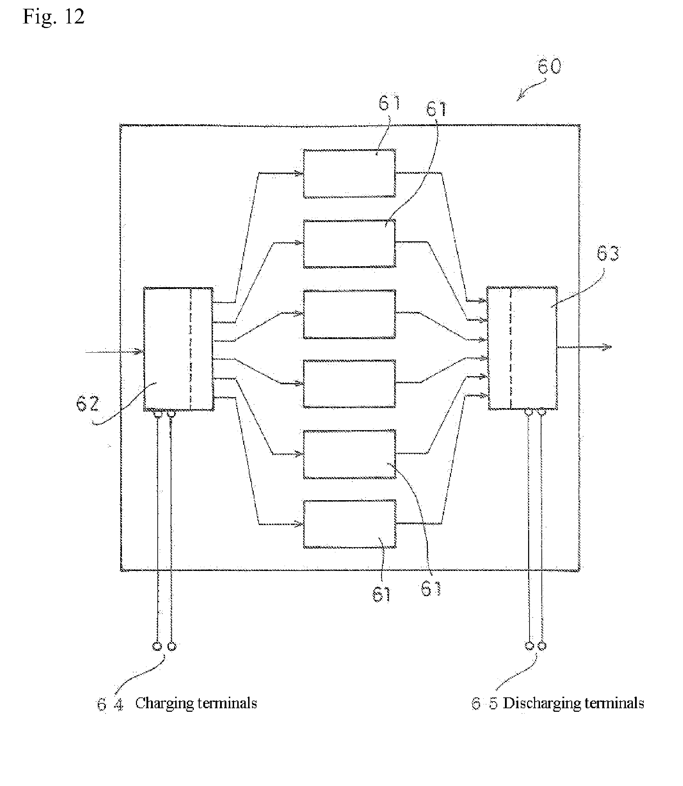

As shown in Fig. 8, a capacitor part 60 is disposed in parallel to the first and second battery packs 11 and 12. Fig. 12 shows the structure of the capacitor part 60 in greater detail.

As shown in Fig. 12, the capacitor part 60 is configured of n (where n is an integer) double-layer capacitors 61, a charge-switching controller 62 for sequentially charging each of the n double-layer capacitors 61 at prescribed intervals T using the inputted power, and a discharge-switching controller 63 for sequentially discharging the charged double-layer capacitors 61.

The capacitor part 60 having this construction is connected to the charging/discharging switch device 42 as a third electrical storage device. The terminals on the capacitor part 60 connected to the charging/discharging switch device 41 are divided into a pair of charging terminals 64 and a pair of discharging terminals 65.

The charging terminals 64 and the discharging terminals 65 can be made common when the capacitor part 60 is designed to have a charge/discharge-switching circuits which can be controlled by the switch controller 52.

In addition to the A/B mode switching means, the CPU of the switch controller 52 also functions as a capacitor discharging means, as described below.

Specifically, the CPU of the switch controller 52 detects when the halted vehicle begins moving. At this time, the CPU transmits an ON signal for connecting the discharging terminals 65 of the capacitor part 60 to the electric motor 20 and a signal for switching off the first and second battery packs 11 and 12. Hence, the CPU operates the electric motor 20 with a large current required for starting the vehicle in motion for a prescribed time (the length of time required to discharge all of the n double-layer capacitors 61) before returning to the normal switching means.

The charge-switching controller 62 receives the charging power from the in-wheel generators 30, de-multiplexes the power with a de-multiplexer denoted by the right side of the dotted line in Fig. 12, and supplies the power as a time division signal to the n double-layer capacitors 61.

The discharge-switching controller 63, on the other hand, controls discharging of power stored in the n double-layer capacitors 61 with a time division signal. The discharge-switching controller 63 multiplexes this discharged power with a multiplexer denoted by the right side of the dotted line in Fig. 12, and supplies the discharged power to the electric motor 20.

## Claims

1. A lead-free battery comprising:
an anode formed of a mixture of calcium, silver oxide, and carbon;
a cathode formed of a mixture of zinc and carbon;
wherein lead is not used in the anode or in the cathode;
a separator disposed between the anode and the cathode for selectively allowing passage of hydroxide ions; and
an aqueous alkaline solution provided between the anode and the cathode as an electrolyte solution.

2. A lead-free battery according to Claim 1, wherein (a) the anode comprises a mesh-shaped cupronickel electrode base material, and an anode paste material formed by mixing calcium, silver oxide, and carbon after introducing a binder, the paste material being applied to the electrode base material and dried; and wherein (b) the cathode comprises a mesh-shaped zinc plate electrode base material, and a cathode paste material formed by mixing zinc and carbon after introducing a binder, the paste material being applied to the electrode base material and dried.

3. A lead-free battery according to either Claim 1 or Claim 2, wherein the proportions of calcium, silver oxide, and carbon mixed for the anode at least fall within the ranges 40-60% calcium, 20-30% silver oxide, and 10-40% carbon.

4. A lead-free battery according to either Claim 1 or Claim 2, wherein the proportions of zinc and carbon mixed for the cathode at least fall within the ranges 60-90% zinc, and 10-40% carbon.

5. A vehicle system employing the lead-free battery according to Claim 1, the vehicle system comprising:
(a) a cell having a plurality of the anodes and the cathodes arranged alternately, with both surfaces of the anodes and the cathodes opposing surfaces of the other through separators interposed therebetween in order to increase the capacity of the cell:
(b) a first and a second battery packs comprising a plurality of the cells of a prescribed capacity connected in series for outputting a prescribed DC voltage;
(c) in-wheel generators comprising rotors fixed to a wheel disc of each wheel on a vehicle, and stators fixed in axle bearings for each wheel so that at least part of the rotors and stators are accommodated in a space enclosed by the wheel discs and rims of the wheels, thus the in-wheel generators functioning to output power when the wheels rotate as the vehicle moves;
(d) an electric motor for driving the vehicle with electric power;
(e) a charging/discharging switch device capable of switching between (i) a "first battery discharging / second battery charging" mode in which an electrode terminal of the first battery pack is connected to an input terminal of the electric motor according to an ON signal and an electrode terminal of the second battery pack is connected to the in-wheel generators according to an ON signal, and (ii) a "second battery discharging / first battery charging" mode in which an electrode terminal of the second battery pack is connected to an input terminal of the electric motor according to an ON signal and an electrode terminal of the first battery pack is connected to the in-wheel generators according to an ON signal; and
(f) a switch controller configured of a computer comprising mode switching means (i) for measuring the amount of power consumption in each of the first and the second battery packs, (ii) for accumulating the results in memory, and (iii) for automatically transmitting control signals to a set of electric switches in the charging/discharging switch device to switch battery packs when a battery level of one battery pack drops below a prescribed level stored in memory.

6. A vehicle system according to Claim 5, wherein (a) each of the anodes in the cells comprises a mesh-shaped cupronickel electrode base material having a prescribed volume and dimensions, and an anode paste material formed by mixing calcium, silver oxide, and carbon at prescribed proportions after introducing a binder, the paste material being applied to the electrode base material and dried; and wherein (b) each of the cathodes in the cells comprises a mesh-shaped zinc plate electrode base material having the same volume and dimensions as the anodes, and a cathode paste material formed by mixing zinc and carbon at prescribed proportions after introducing a binder, the paste material being applied to the electrode base material and dried.

7. A vehicle system according to Claim 5, wherein the prescribed proportions of calcium, silver oxide, and carbon mixed for the anode paste material at least fall within the ranges 40-60% calcium, 20-30% silver oxide, and 10-40% carbon; and the prescribed proportions of zinc and carbon mixed for the cathode paste material at least fall within the ranges 60-90% zinc, and 10-40% carbon.

8. A vehicle system according to Claim 5, wherein the switch controller comprises generator separating means for constantly monitoring the output voltages of the connected battery pack and the in-wheel generators, and for transmitting a switch (OFF) signal to all electric switches for output terminals of the in-wheel generators when the voltages of the in-wheel generators drop below that of the battery pack.

9. A vehicle system according to Claim 5, further comprising (a) a third electrical storage device disposed on the charging/discharging switch device along with the first and the second battery packs, the third electrical storage device being a capacitor part that comprises n (where n is an integer) double-layer capacitors, (b) a charge-switching control circuit for sequentially charging each of the n double-layer capacitors at prescribed intervals using the inputted power, and (c) a discharge-switching control circuit for sequentially discharging the n double-layer capacitors;
wherein the switch controller comprises capacitor discharging means for detecting when the vehicle begins moving and, upon detecting this movement, for transmitting a control signal to connect the capacitor part to the electric motor of the vehicle in order that the electric motor is supplied with a large current required for starting the vehicle in motion.
